# FASCICULE DE BREVET EUROPEEN

(11) **EP 0 349 441 B1**
(45) Date de publication et mention de la délivrance du brevet: **29.09.1993**
(21) Numéro de dépôt: 89401890.2
(22) Date de dépôt: 30.06.1989
(51) Int. Cl.: C02F 3/28, B01J 29/06, E03F 11/00

(54) **Produit et procédé pour activer le fonctionnement d'un système de digestion anaérobie de résidus organiques solides**
Produkt und Verfahren zur Aktivierung eines anaeroben Gärungssystemes für organische Festabfälle
Product and process for activating an anaerobic digestion system for residual organic solids

(30) Priorité: 01.07.1988 FR 8808940
(43) Date de publication de la demande: 03.01.1990
(73) Titulaire: EPARCO, F-75009 Paris (FR)
(72) Inventeur: Philip, Hervé, F-34570 Pignan (FR)
(74) Mandataire: Derambure, Christian

(56) Documents cités:
- EP-A- 0 248 709
- FR-A- 1 268 165
- FR-A- 2 357 490
- BLÄTTER FÜR LANDTECHNIK, no. 225, juin 1983, Eidg. Forschungsanstalt für Betriebswirtschaft und Landtechnik, Tänikon (CH); A. WELLINGER et al., pp. 1-11#
- PATENT ABSTRACTS OF JAPAN, vol. 7, no. 151 (C-174)[1296], 2 juillet 1983; p. 145 C 174#
- PATENT ABSTRACTS OF JAPAN, vol. 6, no. 143 (C-117)[1021], 3 août 1982; p. 26 C 117#

## Description

L'invention concerne un produit et un procédé pour activer le fonctionnement d'un système de digestion anaérobie de résidus organiques solides tel que notamment mais non exclusivement une fosse septique.

On connaît déjà les fosses septiques et leurs modalités de mise en oeuvre. Une fosse septique a trois fonctions : la collecte des eaux usées, la rétention des matières solides et des déchets flottants et la liquéfaction au moins partielle de ces matières solides et déchets flottants. Les matières légères des eaux usées telles que les graisses et les particules légères ont tendance à s'accumuler en surface. Les matières lourdes ont tendance à s'accumuler dans le fond de la fosse septique. Grâce aux bactéries se trouvant dans la fosse septique, les matières accumulées ou déposées ont tendance à être liquéfiées par un processus de fermentation anaérobie. Ces matières ainsi solubilisées peuvent être évacuées avec les eaux décantées dirigées vers un système d'épandage en sortie de la fosse septique. Ce processus de fermentation non seulement tend à la réduction du volume des matières accumulées ou déposées, par liquéfaction, ce qui est souhaité, mais tend aussi à la production de gaz malodorants qui permettent de faire passer le carbone notamment de la phase liquide à la phase gazeuse, ce qui réduit d'autant la pollution. Les bactéries se trouvant dans la fosse septique proviennent essentiellement des matières fécales elles-mêmes. A partir de cet ensemencement naturel et permanent qui résulte de l'usage même de la fosse septique, il se développe, dans la fosse septique, une flore bactérienne adaptée à son fonctionnement.

On a cherché à améliorer le fonctionnement des fosses septiques. A cet effet, on a d'abord proposé d'agencer la fosse septique elle-même de manière la plus optimale, notamment en jouant sur sa structure et ses dimensions. Toutefois, cela a eu souvent pour effet de compliquer la fosse septique avec les inconvénients qui en résultent sans que l'efficacité réelle soit prouvée.

Ensuite, on a proposé d'introduire dans la fosse septique des produits dont l'objectif serait d'activer son fonctionnement. Par exemple, le document CA 1 086 434 se refère à des poussières de charbon facilitant la digestion des bactéries anaérobies. Le document FR 2 338 227 se réfère à un produit à base d'acide citrique qui active l'action des micro-organismes. Le document FR 2 190 742 se réfère à l'ajout, dans la fosse septique, de doses de souches actives de micro- organismes. Le document WO 87 05592 se réfère à l'usage de zéolite hydrophobe adsorbante permettant d'éliminer les substances toxiques pour les bactéries. Le document JP 60 114 394 prévoit l'usage de particules de carbure activant les micro-organismes.

D'autres solutions ont également été proposées notamment dans les documents WO 85 00355, DE 3 106 422, US 3 645 769 (qui prévoit d'imprégner le papier toilette de levure de manière qu' une fois dans la fosse septique, il favorise le développement des bactéries).

On a également proposé, comme produits, des bases actives composées de diastases ou d'enzymes d'origine bactérienne (document FR 1 268 165), ou, plus généralement, d'ajouter des bactéries exogènes à la fosse septique.

On a également proposé un activateur biologique qui augmente la densité de saturation en bactéries dans la fosse septique (documents FR 2 357 490 et FR 2 599 356).

L'invention a également pour objet général d'activer le fonctionnement des systèmes de digestion anaérobie des résidus organiques solides, tels que notamment mais non exclusivement les fosses septiques conventionnelles, par adjonction d'un produit approprié. Elle concerne aussi tout système fonctionnellement équivalent à une fosse septique, en ce qui concerne le fonctionnement (c'est-à-dire comportant une phase de fermentation anaérobie), mais d'usage ou de destination différent tel que lagunes d'épuration, fosse à lisier, décanteurs-digesteurs, cette liste n'étant pas limitative. Son but est d'améliorer cette activation.

A cet effet, l'invention propose un procédé pour activer le fonctionnement d'un système de digestion anaérobie des résidus organiques solides et notamment une fosse septique ou équivalent en étant placé dans celle-ci tel que par la modification qualitative du processus d'hydrolyse se produisant dans le système, ce produit a pour fonction de fractionner les fibres de cellulose et d'alourdir les flocs les plus légers qu'il contient, ce qui a pour effet de diminuer le volume des boues se trouvant dans le système pour un poids sec égal. Ce produit peut être un catalyseur biologique favorisant le processus de méthanogénèse, le processus d'hydrolyse, le processus d'acidogénèse pour l'acide acétique.

Selon l'invention on introduit dans le systeme des doses dudit produit pour activer le fonctionnement du système , notamment une fosse septique ou équivalent, notamment la fosse septique, à intervalles de temps convenable, une dose de produit étant de l'ordre de 35 - 40 grammes et la périodicity d'introduction d'une telle dose étant hebdomadaire pour une fosse septique pour quatre personnes.

Les autres caractéristiques de cette invention résulteront de la description qui suivra.

L'invention concerne un procédé pour activer le fonctionnement d'un système de digestion anaérobie des résidus organiques solides, notamment mais non exclusivement une fosse septique, une dose convenable du produit étant placée ce système notamment dans la fosse septique.

Ainsi qu'il a été déjà indiqué, l'invention s'applique aussi à tout système fonctionnellement équivalent à une fosse septique mais d'usage ou de destination différent. Dans le texte l'expression "fosse septique" doit être comprise comme signifiant non seulement une fosse septique, selon l'acception courante, mais aussi de tels systèmes fonctionnellement équivalents, la description étant plus particulièrement faite dans le cas d'une fosse septique.

Le produit, selon l'invention, peut d'abord être décrit par ses propriétés fonctionnelles et les effets obtenus par la mise en oeuvre de celles-ci dans le cas d'application particulier d'une fosse septique.

Une première fonction du produit, obtenue par la modification qualitative du processus d'hydrolyse se produisant dans la fosse septique, est de fractionner les fibres de cellulose et d'alourdir les flocs les plus légers que contient la fosse septique. Cette fonction a pour effet de diminuer le volume des boues se trouvant dans la fosse septique, pour un poids sec égal. Les fibres de cellulose sont celles qui sont contenues dans les matières fécales elles-mêmes ou encore celles contenues dans le papier toilette. Le processus d'hydrolyse, sur lequel on reviend par la suite, permet, d'une façon générale, de transformer les composés solides qui forment les boues - et notamment ceux à base de cellulose - en composés solubles de plus faible poids moléculaire (tel que du glucose). Ce processus est mis en oeuvre grâce aux bactéries se trouvant dans la fosse septique, bactéries qui libèrent des exoenzymes dans la fosse septique. Ces bactéries sont essentiellement celles provenant des matières fécales elles-mêmes. Le produit, selon l'invention, n'a donc pas à comporter des bactéries venant s'ajouter à celles présentes naturellement dans la fosse septique, par suite de sa mise en oeuvre, et le procédé selon l'invention ne comporte pas obligatoirement une phase d'adjonction de bactéries exogènes autres que celles provenant des matières fécales elles-mêmes, ainsi que cela résulte du fonctionnement de la fosse septique.

Le fractionnement des fibres de cellulose par le produit introduit dans la fosse septique, permet d'obtenir des fibres de cellulose de plus courte longueur de sorte que les boues ont une structure moins expansée.

Le produit, selon l'invention, est également un catalyseur biologique. Ce catalyseur peut d'abord avoir pour première fonction de favoriser le processus de méthanogénèse se produisant dans la fosse septique, ce qui a pour effet d'éliminer les acides gras volatils produits. Le processus de méthanogénèse participe à la liquéfaction des boues et conduit à la production de méthane à partir de l'acide acétique, des gaz carbonique et de l'hydrogène se trouvant dans la fosse septique. Grâce au produit ayant pour fonction de favoriser le processus de méthanogénèse, il est possible de tendre à éliminer les excès d'acides gras volatils, ce qui contribue à activer le fonctionnement de la fosse septique.

En combinaison avec cette première fonction consistant à favoriser le processus de méthanogénèse, le catalyseur biologique peut également remplir une deuxième fonction consistant à favoriser le processus d'hydrolyse ce qui a pour effet direct la diminution de la masse et du volume des boues se trouvant dans la fosse septique.

Enfin, le catalyseur biologique peut également avoir pour troisième fonction de favoriser le processus d'acidogénèse se produisant dans la fosse septique. Le processus d'acidogénèse est le processus par lequel les composés solubles libérés par le processus d'hydrolyse sont transformés en acides gras volatils parmi lesquels le principal est l'acide acétique. Le cas échéant, ces acides gras volatils comprennent également de l'acide proprionique et de l'acide butyrique notamment, en quantités importantes. Ces acides proprionique et butyrique, notamment, doivent être transformés en acide acétique avant de subir le processus de methanogénèse pour la production de méthane, ainsi qu'il a été déjà indiqué. L'accumulation des acides produits par le processus d'acidogénèse peut, au-delà d'un certain plafond de l'ordre par exemple de 2 à 3 grammes par litre être toxique pour le processus de méthanisation. Tel et le cas des acides proprionique et butyrique, déjà mentionnés, plus difficilement métabolisables que l'acide acétique. Précisément, l'activation du processus d'acidogénèse est fait au profit de l'acide acétique et ne conduit pas à une production supplémentaire d'acide proprionique et d'acide butyrique.

La fonction consistant à favoriser le processus de methanogénèse peut intervenir seule. En revanche, les fonctions exercées vis-à-vis des processus d'hydrolyse et d'acidogénèse ne peuvent intervenir que simultanément avec la fonction sur le processus de methanogénèse, faute de quoi, il se produirait une accumulation peu souhaitable d'acides gras volatils. Cependant, la fonction consistant à favoriser le processus de methanogénèse, peut, à elle seule, être insuffisante, dans certains conditions, pour l'élimination convenable des acides gras volatils. Tel est par exemple le cas lorsque la fosse septique est sous-dimensionnée ou que la hauteur des boues est trop importante pour permettre une évacuation des acides gras volatils en excès avec les eaux décantées. Dans le cas où la concentration en acides gras volatils augmente, le processus de methanogénèse est inhibé et il y a risque, éventuellement, de voir le processus d'hydrolyse lui-même inhibé. Dans ce cas, la liquéfaction des matières solides n'intervenant plus, l'engorgement total de la fosse septique est inévitable; et précisément, grâce à la mise en oeuvre du produit selon l'invention, un tel engorgement est évité et la fosse septique fonctionne convenablement. Le même produit peut simultanément exercer sa ou ses fonctions de catalyseur biologique, ainsi qu'il vient d'être décrit, ainsi que la modification qualitative du processus d'hydrolyse avec pour fonction de fractionner les fibres de cellulose et d'alourdir les flocs les plus légers ainsi qu'il a été également déjà décrit.

Un tel produit pour activer le fonctionnement d'une fosse septique ayant été ainsi décrit fonctionnellement peut faire l'objet de nombreuses formes de réalisations aptes à remplir, en tout ou en partie, et avec un degré plus ou moins important, les fonctions mentionnées.

Des formes de réalisations structurelles possibles de tels produits sont décrites, étant souligné toutefois, que ces formes de réalisations sont purement indicatives et nullement limitatives.

Le produit fonctionnel précédemment décrit, est un produit solide, minéral, ayant une surface spécifique comprise entre 20 et 120 et notamment 32 et 101 mètres carrés par gramme (m²/g); une capacité d'échange cationique comprise entre 5 et 80 et notamment 14 et 64 meq/100 grammes; un pourcentage de matières volatiles dans le poids sec compris entre 2 et 12 et notamment 4,8 et 9,9 % ; un pH à l'eau compris entre 6,5 et 8 et notamment 6,9 et 7,9; un potentiel d'oxydo-réduction dans l'eau compris entre 0 et - 600 et notamment - 130 et - 480 mV.

De plus, un tel produit présente principalement une granulométrie dans la fourchette de 16 à 64 µm.

Quant à sa composition, un tel produit peut comprendre, en pourcentage dans le poids sec, entre 0,1 et 6 et notamment 0,2 et 5,4 de calcium; entre 0,06 et 5,5 et notamment 0,07 et 5,12 de magnésium.

Le pourcentage dans le poids sec de potassium est de l'ordre 0,03 à 3.

Dans une forme de réalisation possible, le produit est constitué essentiellement à partir de silicates d'alumine naturel et, dans ce cas, le pourcentage, dans le poids sec, de silice peut etre de l'ordre de 20 à 30 ou 40.

Il doit être noté que s'agissant des caractéristiques physico-chimiques du produit, il existe des facteurs plutôt positifs et des facteurs plutôt négatifs par rapport à l'application qui est faite dans une fosse septique en vue d'en activer le fonctionnement. Les paramètres jouant un rôle positif sont tout spécialement une surface spécifique importante, une capacité d'échange cationique importante, un potentiel d'oxydo-réduction négatif important; une fraction granulométrique susbtantielle dans la fourchette 16 à 64 µm ou environ, comme déjà indiqué ou une partie aussi importante que possible dans cette fourchette; et enfin des teneurs en cuivre, zinc, sodium, calcium, magnésium, potassium, titane et aluminium élevées tout en restant limitées pour éviter, par exemple, des effets toxiques au de là d'un certain seuil. Inversement, certains paramètres physicochimiques ont un effet négatif. Ces paramètres jouant un rôle négatif sont le pourcentage éléve de matière volatile, un pH à l'eau en dehors de la fourchette 6,5 à 8 ou environ, les fractions granulométriques situées en dehors de la fourchette 16 à 64 µm déjà mentionnée précédemment et enfin des teneurs élevées en silice, phosphore et fer. Il doit être noté ici, cependant, qu'une trop faible teneur en silice aurait également un rôle négatif.

D'excellents résultats ont été obtenus avec un produit constituant un compromis, caractérisé par une très forte teneur en cuivre, des taux élevés en zinc et aluminium, de faibles teneurs en phosphore, fer, sodium, calcium, magnésium et potassium, peu de particules constitutives entre 64 et 192 µm et au contraire une proportion substantielle de particules comprise entre 0 et 16 µm, une forte teneur en silice, une faible surface spécifique et une faible capacité d'échange cationique, étant précisé que les notions de forte et de faible teneur ne sont ici que relatives. Le produit considéré peut avoir par exemple une surface spécifique de l'ordre de 32 m²/g ce qui est, dans l'absolu, assez élevé mais relativement à d'autres produits de comparaison est plutôt faible.

En effet, une surface spécifique élevée et une capacité cationique élevée ont tendance à favoriser les phénomènes d'échange et d'absorption. Un potentiel d'oxydo-réduction fortement négatif crée un environnement favorable pour les bactéries anaérobies qui se développent toujours dans des systèmes à potentiel négatif. Les grosses particules c'est-à-dire celles de granulométrie élevée ont tendance à empêcher l'obtention de surface spécifique importante et, en conséquence, ont une capacité d'échange cationique plutôt faible. Les particules les plus petites qui se rapprochent de la taille des bactéries elles-mêmes sont moins favorables à la fixation de celles-ci. C'est la raison pour laquelle la fourchette 16 - 64 µm a été considérée comme un compromis convenable pour la fixation des bactéries, la surface spécifique, la capacité d'échange cationique, et la microporosité.

Une teneur élevée en silice n'est pas très favorable notamment car elle est liée à la présence de matières vitrifiées donnant de grosses particules peu actives, soit à de la poussière de silice intrinsèquement peu active fonctionnellement.

Ces caractéristiques étant indiquées, on comprend qu'il soit possible de proposer des structures différentes de produits conformes à l'invention, toutes ces structures étant comprises dans le cadre de la présente invention dès lors qu'elles réalisent les fonctions précédemment mentionnées. Par exemple, un produit selon l'invention, peut avoir une surface spécifique moyenne, ce qui serait plutôt négatif, cela étant compensé par une très forte teneur en cuivre et un très bas potentiel d'oxydoréduction, ce qui est positif. Un potentiel d'oxydorédution très négatif peut découler d'éléments métalliques tels que le cuivre et le zinc contenus dans le produit, le cuivre jouant un rôle positif et le zinc un rôle négatif. De plus, le zinc pourrait, en tant qu'oligo-élément, favoriser les bactéries.

On peut mentionner, comme cas particulier indicatif, un produit du type général mentionné précédemment donnat d'excellents résultats et dont les paramètres physico-chimiques ont les valeurs suivantes :
Surface spécifique : 32 m²/g
Capacité d'échange cationique : 14 m.eq/100g
Pourcentage de matière volatile dans le poids sec : 9,5 MV %
pH à l'eau : 6,9
Potentiel d'oxydoréduction dans l'eau : - 480 mV
Pourcentage de calcium dans le poids sec : 0,19 %
Pourcentage de magnésium dans le poids sec : 0,07 %
Pourcentage de potassium dans le poids sec : 0,036 %
Pourcentage de sodium dans le poids sec : 0,021 %
Pourcentage de fer dans le poids sec : 1,52 %
Pourcentage d'aluminium dans le poids sec : 12,61 %
Pourcentage de silicium dans le poids sec : 27,3 %
Pourcentage de titane dans le poids sec : 3,3 %
Partie par millions de manganèse : 85 PPM
Partie par millions de cuivre : 2.150 PPM
Partie par millions de zinc : 4.588 PPM
Partie par millions de phosphore : 438 PPM
Un tel produit est constitué essentiellement de ou à partir de silicate d'alumine naturel ou équivalent. Il va de soi, cependant que cela n'est pas limitatif de l'invention.

Selon le procédé d'invention, on introduit dans la fosse septique, à intervalles de temps convenables, des doses appropriées au dit produit.

Pour une fosse septique correspondant à une utilisation par quatre personnes, avec une utilisation normale des WC c'est-à-dire un usage normal de la fosse septique, le procédé selon l'invention est efficace, au moyen du produit particulier défini précédemment, avec une dose unitaire de l'ordre de 35 à 40 grammes environ, introduite dans la fosse septique avec une périodicité hebdomadaire, une dose supplémentaire par semaine étant ajoutée par quatre personnes supplémentaires.

Des essais du produit particulier défini précédemment, mis en oeuvre selon le procédé également défini ont montré l'efficacité obtenue pour activer le fonctionnement de la fosse septique, par rapport à un témoin, sans produit. Cette efficacité se traduit notamment par les effets suivants : bon équlibre des différentes phases de la digestion anaérobie de la fosse septique ; activation des bactéries et enzymes apportées naturellement par les matières fécales (plus de 15 000 milliards de bactéries par jours et par individu) ; réduction du volume de boues ; diminution ou suppression des mauvaises odeurs ; réduction des risques d'engorgement de la fosse septique sous dimensionnée ou momentanément surchargée.

Des essais comparatifs ont été menés avec le produit et la procédé selon l'invention et certains produits différents du commerce destinés aux fosses septiques. Et il a été constaté, en général, l'obtention d'une plus grande efficacité avec l'invention. Cette plus grande efficacité se traduit notamment par le fait que ces produits du commerce favorisent la production des acides butyrique et propionique, ce qui va à l'encontre d'un bon équilibre biologique de la fosse septique et ne peut qu'agraver la situation d'une fosse déjà engorgée ou sur le point de l'être. Les bactéries supplémentaires et exogènes aux matières fécales éventuellement ajoutée ne jouent pas un rôle déterminant. Il peut éviter un éventuel effet apparent qui, toutefois, n'est pas confirmé par une réduction de la durée nécessaire à la digestion anaérobie des boues, ce que l'on pourrait onstater par une diminution des résidus. Au contraire, on constate souvent une certaine augmentation du volume des boues, tant fraîches qu'en fin de méthanisation.

L'invention a été décrite essentiellement en référence au produit représentant le "principe actif" propre à favoriser le fonctionnement d'une fosse septique. Un tel produit ou un tel type de produit peut être mis en oeuvre seul (un produit unique ou plusieurs produits différents mais chacun actif). Mais un tel produit ou un tel type de produit peut être aussi mis en oeuvre grâce à une composition qui le comporte. Une telle composition comporte alors, outre au moins un tel produit selon l'invention, au moins un autre produit différent associé. Cet autre produit peut être, par rapport à l'application considérée, inerte ou au contraire fonctionnel. Il peut s'agir, par exemple, d'une charge faisant fonction d'excipient, ou d'un support y compris solide ou liquide, la liste n'étant pas limitative. Cet autre produit peut, le cas échéant, inclure des bactéries éxogènes, bien que l'expérience ait démontré que celles-ci non seulement ne sont pas indispensables mais même peuvent avoir un effet contrariant le principe actif du produit selon l'invention. Il va de soi que l'invention concerne aussi de telles compositions dès lors qu'elles comportent au moins un produit tel que décrit précédemment, même si une telle composition est finalement d'efficacité plus limitée, que celle du produit selon l'invention seul, soit parce que le produit selon l'invention constituant le "principe actif" est "dilué" dans la composition telle qu'elle est employée, soit parce que l'autre produit ne procurant pas le "principe actif" et entrant dans la composition contrarie les effets positifs du "principe actif".

## Revendications

1. Procédé pour activer le fonctionnement d'un système de digestion anaérobie de résidus organiques tel qu'une fosse septique, caractérisé par le fait qu'on introduit dans le système à intervalles de temps convenables, des doses d'un produit pour activer le fonctionnement d'un système de digestion anaérobie de résidus organiques tel qu'une fosse septique ou équivalent en étant placé dans ce système, une dose de produit étant de l'ordre de 35 à 40 grammes, la périodicité d'introduction d'une telle dose étant hebdomadaire, pour une fosse septique pour quatre personnes, une dose hebdomadaire supplémentaire étant ajoutée par quatre personnes supplémentaires, ledit produit se présentant sous forme solide, ayant une surface spécifique comprise entre 20 et 120 m²/g ; une capacité d'échange cationique comprise entre 5 et 80 meq/100 g ; un pourcentage de matières volatiles dans le poids sec compris entre 2 et 12 % ; un pH à l'eau compris entre 6,5 et 8 ; un potentiel d'oxydo-réduction dans l'eau compris environ 0 et - 600 ; présentant principalement une granulométrie dans la fourchette 16 à 64 µm
ce produit assurant la combinaison des fonctions consistant à :
(a)Fractionner les fibres de cellulose et d'alourdir les flocs les plus légers contenus dans le système, ce qui a pour effet de diminuer le volume des boues ;
(b)Favoriser le processus de méthanogénése, ce qui a pour effet d'éliminer les acides gras volatils se trouvant dans le système ;
(c)Favoriser le processus d'hydrolyse, ce qui a pour effet la diminution de la masse et du volume des boues se trouvant dans le système ;
(d)Favoriser le processus d'acidogènèse pour l'acide acétique.

2. Procédé selon la revendication 1, caractérisé en ce que le produit comprend, en pourcentage dans le poids sec, entre 0,1 et 6 et notamment 0,2 et 5,4 de calcium.

3. Procédé selon l'une quelconque des revendications 1 à 2, caractérisé en ce que le produit comprend, en pourcentage dans le poids sec, entre 0,06 et 5,5 et notamment 0,07 et 5,12 de magnésium.

4. Procédé selon l'une quelconque des revendications 1 à 3, caractérisé en ce que le produit comprend, en pourcentage dans le poids sec, de l'ordre de 0,03 à 3 de potassium.

5. Procédé selon l'une quelconque des revendications 1 à 4, caractérisé par le fait que le produit est associé au moins avec un autre produit inerte ou fonctionnel associé.

## Claims

1. Process for activating the operation of a system for anaerobic digestion of organic residues, such as a septic tank, characterised in that measured quantities of a product for activating the operation of a system for anaerobic digestion of organic residues, such as a septic tank or equivalent are introduced into the system at suitable intervals of time by being placed in this system, a measured quantity of product being of the order of 35 to 40 grams, the frequency of introduction of such a measured quantity being weekly in the case of a septic tank for four people, an additional weekly measured quantity being added per four additional people, the said product being in solid form having a specific surface of between 20 and 120 m²/g; a cation exchange capacity of between 5 and 80 meq./100 g; a percentage of volatile matter in the dry weight of between 2 and 12 %; a pH in water of between 6.5 and 8; an oxidation-reduction potential in water of between approximately 0 and -600; exhibiting chiefly a particle size in the range 16 to 64 µm
this product providing the combination of the functions consisting in:
(a) fractionating the cellulose fibres and increasing the weight of the lightest flocs present in the system, which has the effect of decreasing the volume of sludge;
(b) promoting the methanogenesis process, which has the effect of removing the volatile fatty acids present in the system;
(c) promoting the hydrolysis process, which has the effect of decreasing the mass and the volume of the sludge present in the system;
(d) promoting the process of acidogenesis of acetic acid.

2. Process according to Claim 1, characterised in that the product comprises, as a percentage in the solids content, between 0.1 and 6 and especially 0.2 and 5.4 of calcium.

3. Process according to either of Claims 1 and 2, characterised in that the product comprises, as a percentage in the solids content, between 0.06 and 5.5 and especially 0.07 and 5.12 of magnesium.

4. Process according to any one of Claims 1 to 3, characterised in that the product comprises, as percentage in the solids content, of the order of 0.03 to 3 of potassium.

5. Process according to any one of Claims 1 to 4, characterised in that the product is used in combination with at least one other associated inert or functional product.

## Patentansprüche

1. Produkt zur Aktivierung eines anaeroben Gärungssystems für organische Festabfälle wie z.B. einer Faulgrube, dadurch gekennzeichnet, daß in regelmäßigen Abständen eine bestimmte Dosis eines Produktes zur Aktivierung eines anaeroben Gärungssystems für organische Festabfälle wie z.B. einer Faulgrube diesem System beigegeben wird, wobei bei einer Faulgrube für vier Personen die Dosismenge ca. 35 bis 40 Gramm und der regelmäßige Abstand zwischen den Beigaben ca. eine Woche beträgt und für jeweils vier weitere Personen eine weitere wöchentliche Dosis beigegeben wird, sowie dadurch, daß das Produkt ein Feststoff ist, eine Oberflächenkennzahl zwischen 20 und 120 m²/g, eine Kationenaustauschkapazität zwischen 5 und 80 meq/100 g, einen Anteil flüchtiger Bestandteile bei Trockengewicht zwischen 2 und 12 %, einen pH-Wert zwischen 6,5 und 8, ein Oxidations-Reduktionspotential in Wasser zwischen 0 und -600 und eine Korngröße überwiegend zwischen 16 und 64 µm besitzt,
wobei das Produkt die kombinierten Eigenschaften besitzt,
a) Zellulosefasern aufzuspalten und die leichteren Flock-fasern im System zu beschweren, wodurch das Schlammvolumen verringert wird,
b) den Methanerzeugungsprozeß zu fördern, wodurch die flüch-tigen Fettsäuren in dem System beseitigt werden,
c) den Hydrolyseprozeß zu fördern, was zur Verringerung von Gewicht und Volumen der Schlammanteile im System führt,
d) den Säurebildungsprozeß für Essigsäure zu fördern.

2. Verfahren nach Patentanspruch 1, dadurch gekennzeichnet, daß das Produkt einen Trockengewicht-Prozentsatz zwischen 0,1 % und 6 % und insbesondere zwischen 0,2 % und 5,4 % Calcium enthält.

3. Verfahren nach Patentanspruch 1 oder 2, dadurch gekennzeichnet, daß das Produkt einen Trockengewicht-Prozentsatz zwischen 0,06 % und 5,5 % und insbesondere zwischen 0,07 % und 5,12 % Magnesium enthält.

4. Verfahren nach einem der Patentansprüche 1 bis 3, dadurch gekennzeichnet, daß das Produkt einen Trockengewicht-Prozentsatz zwischen 0,03 % und 3 % Kalium enthält.

5. Verfahren nach einem der Patentansprüche 1 bis 3, dadurch gekennzeichnet, daß das Produkt mindestens einem anderen inerten oder funktionalen Produkt zugeordnet ist.
